# EUROPEAN PATENT APPLICATION

(11) **EP 0 951 986 A1**
(43) Date of publication of application: **27.10.1999**
(21) Application number: 97911510.2
(22) Date of filing: 11.11.1997
(51) Int. Cl.: B29D 30/32

(54) **SINGLE STAGE MOLDING MACHINE FOR RADIAL TIRES**

(30) Priority: 11.11.1996 JP 29836096
(71) Applicant: Bridgestone Corporation, Tokyo 104-8340 (JP)
(72) Inventor: AKIYAMA, Naruhiro, Kodaira-shi, Tokyo 187 (JP); SAKYORI, Kiyoshi, Higashimurayama-shi, Tokyo 189 (JP)
(74) Representative: Whalley, Kevin
(86) International application number: JP9704096
(87) International publication number: WO9821025

(57) **Abstract**

A single-stage type building machine (1) for radial tires includes a main drum (2) for winding a radial carcass ply member, locking means for fixedly engaging bead reinforcing members to predetermined portions on both sides of the carcass ply member, turning-up means for turning-up predetermined portions of the carcass ply member around the respective bead reinforcing members, and a sub-drum (6) spaced from a driving device (3) for the main drum (6), for winding at least one of belt member and tread rubber member. The turning-up means includes inner and outer double side bladders on both sides of the main drum (1), which can be inflated by injection of pressurized fluid, and pressing can devices (20, 30) detachably arranged on both sides of the main drum. Each pressing can device (20, 30) has an actuator (21, 31) and a hard cylindrical portion (22, 33) which is attached to one end of the actuator (21, 31) and smaller in inner diameter than the maximum inflation diameter of the outer side bladder. The outer side bladder in its inflated condition is received in the cylindrical portion (22, 33) when the cylindrical portion (22, 33) is displaced by operating the actuator. The carcass ply portion can be selectively turned-up either by inflation of both the inner and the outer side bladders, or by inflation of the outer side bladder alone in combination with displacement of the cylindrical portion of the pressing can device.

## Description

### TECHNICAL FIELD

The present invention relates to a single-stage type building machine for producing radial tires.

### BACKGROUND ART

As know in the art, single-stage type tire building machine is of such a type as to consistently perform tire building operations, from formation of green cases to formation of green tires, by the same machine. The term "single-stage" is used in connection with such a tire building type wherein a single tire building machine sequentially performs formation and diametrical expansion of unvulcanized green case, and stitching of unvulcanized tire constituting member, such as belt member, tread rubber member and the like, onto the outer periphery of the diametrically expanded green case. For this reason, single-stage type tire building machines became predominant as unvulcanized tire building machine for radial tires.

An ordinary tire building process, which is carried out by a single-stage type tire building machine, including stitching and assembling of respective members from starting of green case formation to completion of green tire formation, will be explained below in the order of the process steps, with reference to Figs. 6 to 8. Figs. 6 and 7 are sectional views of the right half part of the tire building machine with reference to a widthwise bisectional plane E corresponding to the equatorial plane of tires, and Fig. 8 is a sectional view of the tire building machine over its total width.

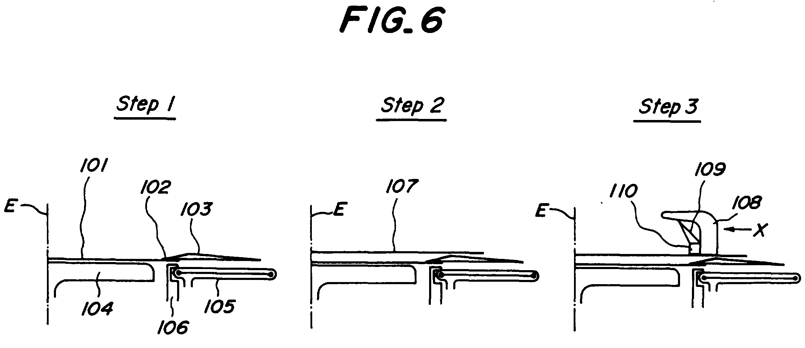

First of all, at step 1 shown in Fig. 6, an inner liner rubber member 101 and side wall rubber members 103 extruded together with rubber chafer members 102 are wound onto a main drum 104 and side bladders 105 on both sides thereof. At a radially inside position between the main drum 104 and the side bladder 105, there is arranged a bead locking mechanism 106 to be described hereinafter, such that it can be diametrically expanded. At the next step 2, one or more carcass ply members 107 are wound onto the surface of the member which has been formed at the step 1. Further, at a step 3, a bead reinforcing member comprising a bead filler rubber member 109 and a bead core member 110, which are united with each other, is moved in the axial direction of the main drum 104 by a setting ring 108 as shown by an arrow X, so as to be fixed to a predetermined outer position of the stuck members which have been subjected to the processing at the step 2.

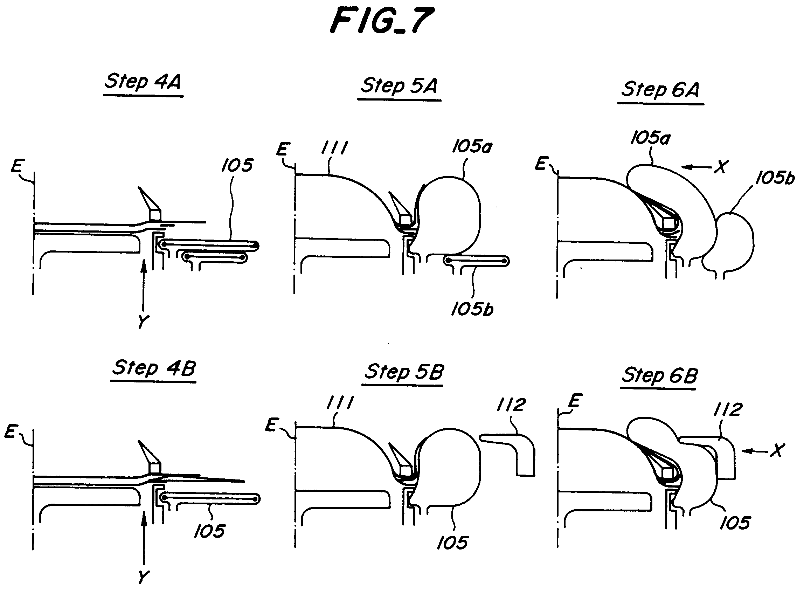

In ordinary tire building method, subsequent process steps are generally classified into double bladder type steps and can type step, both of which are shown in Fig. 7.

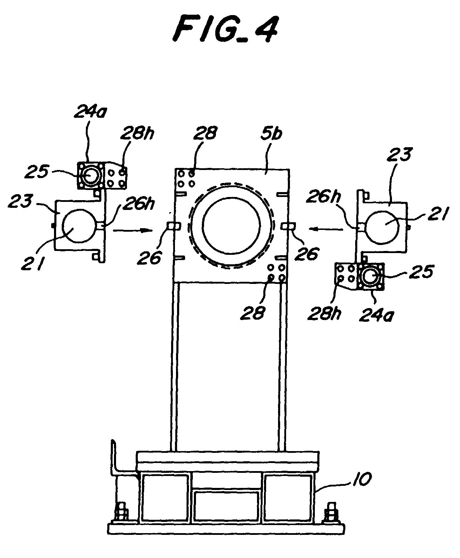

In the double bladder type tire building method, as the side bladders 105 on both sides of the main drum 104, there is used double side bladders 105a, 105b which are arranged on radially outer and inner sides and stacked with each other. In this case, at a step 4A, a locking ring of the locking device 106 which is located on the radially inner side of the bead core member 110 is diametrically expanded as shown by the arrow Y, thereby causing the other members to be pressed toward the bead core member 110 and then to be locked, i.e., fixedly engaged thereto. At a step 5A, low pressure gas or low pressure air is supplied into a green case 111, maintaining the locked condition of the bead core member 110 shown in Fig. 4A, so that the green case 111 is inflated. At the same time, the pressurized gas or pressurized air is first led to the outer side bladder 105a out of the side bladders 105 to radially expand it so that the respective members located on the outer side the bead core member 110 are folded around the bead reinforcing member. Further, at a step 6A, the pressurized gas or pressurized air is led to the inner side bladder 105b to radially expand it so that the outer side bladder 105a is pressed toward the bisectional plane E, which results in completion of the turning-up operation.

In contrast, in the can type tire building method, on each side of the main drum 104, there is used a single side bladder 105 in combination with a pressing can device 112. Except the bladder arrangement, the steps 4B and 5B are substantially same as the steps 4A and 5A for the double bladder type method. At the next step 6B, hard cylindrical portions, e.g. metal-made portions of the pressing can devices 112, which had been waiting on both sides of the main drum 104, are moved toward and abutted against the inflated side bladder 105 in the direction shown by the arrow X, followed by their continued movement toward the bisectional plane E. This causes a part of the side bladder 105 to be forcedly moved toward the bisectional plane E while being contained in the cylindrical portion of the pressing can device 112. Consequently, the side bladder 105 in its inflated condition causes the pressing force directed radially inward, which results in completion of the turning-up operation.

The green case 113, which has been completed through the double bladder type or can type building methods, is subjected in the following steps 7 to 9 to the stitching operation, by applying thereto a top member 116 comprising a belt member 114 and a tread rubber member 115, which has been formed into an annular shape by a sub-building machine (not shown), so as to complete formation of a green tire. That is, at a step 7, a pair of bead locking devices are caused to approach each other as shown by opposite arrows, thereby reducing the distance between the bead core portions. At the same time, the pressurized gas or pressurized air under a predetermined pressure is filled into the green case 113, so that the green case 113 is inflated into a toroidal shape. Next, the above-mentioned top member 116 is transferred in the direction shown by the arrow by a seizing and transferring device 117 called O-ring, and positioned on the outer periphery of the green case 113, so that the inner circumferential surface of the belt member 114 and the outer circumferential surface of the green case 113 are adhered to each other. At a step 8, a pair of stitching rolls closely contacts the entire top member 116 to the green case 113, thereby resulting in completion of the green tire 119. Moreover, at a step 9, the gas filled in the green tire is discharged therefrom and the locking ring of the bead locking device 106 is diametrically contracted so that the green tire 119 is taken out of the seizing and transferring device 117. It is as explained above that such a building machine, which is capable of continuously performing the above-mentioned steps 1 to 9 by a single machine, is called "single-stage type tire building machine".

It is of course that any one of the above-mentioned steps 1 to 9 is important for realizing a satisfactory quality of the product tire. Among others, however, the turning-up operations in the steps 4A to 6A or the steps 4B to 6B shown in Fig. 7 exert a particularly important influence on the quality of the product tire. In this connection, the double bladder type building machines, which are advantageous in terms of the production cost, are employed for producing general purpose radial tires. On the other hand, it is desirable that the can type building machines, which are capable of performing turning-up operations with higher accuracy as compared with the double bladder type ones, are employed for producing high performance radial tires.

The can type single-stage type radial tire building machines are usually more expensive in production cost as compared with the double bladder type ones; therefore, it is of course that the number of such machines is minimized for economic reasons. However, minimization of the can type building machine may raises a problem related to a large fluctuation of weekly or monthly throughput of the high performance radial tires in a tire factory. In other words, when it is required to increase the throughput of the high performance radial tires, it is necessary newly to purchase additional can type building machines. This requires not only a substantial investment but also a long period of time. Depending upon situations, for example, when the purchase has not been not completed in a timely manner, it is required to remodel the existing double bladder type building machines with the expensive cost and the great man-hours. Such a remodeling may also be required in view of recently increasing demand for high performance radial tires.

### DISCLOSURE OF THE INVENTION

It is, therefore, a primary object of the present invention to provide a single-stage type building machine for radial tires, which are capable of promptly dealing with fluctuation of the production ratio between general purpose radial tires and high performance radial tires, at a small investment and with a high changing-over efficiency.

To attain the above-mentioned object, according to the invention, a single-stage type building machine for radial tires comprises: a main drum for winding a radial carcass ply member; a driving device for driving the main drum into rotation; locking means for fixedly engaging bead reinforcing members to predetermined portions on both sides of the carcass ply member; turning-up means for turning-up predetermined portions of the carcass ply member around the bead reinforcing members, respectively; and a sub-drum spaced from the driving device for the main drum, for winding at least one of a belt member and a tread rubber member. According to the present invention, the turning-up means comprises inner and outer double side bladders on both sides of the main drum, which can be inflated by injection of a pressurized fluid, and pressing can devices detachably arranged on both sides of the main drum, wherein each pressing can device has an actuator and a hard cylindrical portion, which is attached to one end of the actuator and smaller in inner diameter than the maximum inflation diameter of the outer side bladder so that the outer side bladder is received in the cylindrical portion in its inflated condition when the cylindrical portion is displaced by operating the actuator. As a result, the carcass ply member can be selectively turned-up either by inflation of both the inner and outer side bladders, or by inflation of the outer side bladder alone in combination with displacement of the cylindrical portion of the pressing can device.

With the single-stage type tire building machine according to the present invention, as described with reference to the steps 1 and 2 in Fig. 6, various kinds of rubber members are wound cylindrically on the main drum and then a predetermined number of carcass plies are wound thereon in accordance with customary practice. The bead core member of the bead reinforcing member is then positioned on a side of the bisectional plane E with reference to an edge of the carcass play, as described with reference to the step 3. The turn-up portion as described with reference to Fig. 7 includes at least one carcass ply.

Each set of the double side bladders for performing the turning-up operation is cylindrical when it is out of operation, and inflated mainly outward in the radial direction due to the filling of the pressurized gas. The side bladders each comprises an elastic body made essentially of rubber, so that they are deformable when a strong force is applied thereto from outside. The force from outside is applied to the outer side bladder at the time of the turning-up operation, due to the inflation of the inner side bladder in the case of a double bladder type building machine, and due to displacement of the hard cylindrical portion, typically a metal-made cylindrical portion, of the pressing can device in the case of a can type building machine, toward the bisectional plane E.

At the time of the turning-up operation, there is a difference in accuracy in terms of height of the turned-up carcass ply of the product, particularly depending on whether the securing condition of the carcass ply around the bead core member is sufficiently tight or rather loose. In this regard, the pressing can device is preferred because the securing becomes further close based on the interlocking movement between the metal-made cylindrical portion and the inflated outer side bladder, although each set of the double side bladders has an increased rigidity due to the inflation of the pressurized gas. For this reason, can type building machines are preferably employed for manufacturing high performance radial tires.

According to the present invention, the double bladder type turning-up means is assumed to be provided at any time and applied to building of general radial tires, while the pressing can devices, which can be detachably secured to both sides of the main drum, are separately prepared and mounted thereon at the time of building high performance radial tires, thereby resulting in highly accurate turning-up operations. This ensures that general and high performance radial tires can be separately produced at a minimized investment and in a short detaching time, without newly purchasing can type, single-stage tire building machine which would require a substantial cost, or without consuming substantial cost and time in connection with modification of the double side bladder type tire building machine.

When carrying out the present invention into practice, it is advantageous that the cylindrical portion of the pressing can device is capable of coping with various sizes of tires and various kinds of main drums. Therefore, it is preferred that the cylindrical portion of at least one of the pressing can devices has a leading end portion and a rear end portion connected to the one end of the actuator, wherein the leading end portion is detachably attached to the rear end portion.

In order to mount the pressing can device onto the tire building machine in a facilitated manner and with high accuracy, it is advantageous that the sub-drum has a hollow shaft, and the actuator of the pressing can device on the side of the sub-drum has a rod which is connected to the cylindrical portion through the hollow shaft of the sub-drum, and is detachably attached to a support for rotatably supporting the sub-drum. In this instance, it is preferred that the pressing can device on the side of the sub-molding device is detachably attached to the support through a fitting coupling which maintains a coaxial relationship between the pressing can device and the sub-drum relative to each other.

Moreover, the sub-drum is required to be rotatable so as to wind at least one of the belt member and the tread rubber member into a band, whereas the pressing can device detachably mounted on the sub-drum is required to be non-rotatable. Therefore, the sub-drum having the hollow shaft may be rotatably supported on a fixed hollow cylinder of the support, with the rod extending through the hollow cylinder. In this instance, the sub-drum may be connected to the support through a pair of bearings for rotatably supporting the hollow shaft of the sub-drum at its inner circumferential surface, and a hollow cylinder for securing the bearings at their inner circumferential surfaces and fixedly connected to the support at one end thereof.

On the other hand, it is advantageous that the pressing can device on the side of the driving device for the main drum is detachably attached to the support for rotatably supporting the main drum on the side of the driving device therefor. In this instance also, it is preferred that the pressing can device on the side of the driving device for the main drum is detachably attached to the support through a centering guiding member which is capable of maintaining the coaxial relationship between the can device and the main drum. The main and the sub-drum have the common center axis, and it is necessary that the center axis of the cylindrical portion of the pressing can device coincides with the above-mentioned center axis. In other words, the pressing can device on the driving device for the main drum can be easily and simply mounted onto the support for the main drum while performing centering of the center axes. For this purpose, it is advantageous that the pressing can device on the side of the driving device for the main drum has a double-acting cylinder, a guide rod, a block for slidably bearing the guide rod, and a cylindrical portion which can be connected to the double-acting cylinder and the guide block, respectively, and operated such that the double-acting cylinder and the guide rod are secured coaxially to the support of the main drum, and the cylindrical portion is then connected to the double-acting cylinder and the guide rod.

### BRIEF DESCRIPTION OF DRAWINGS

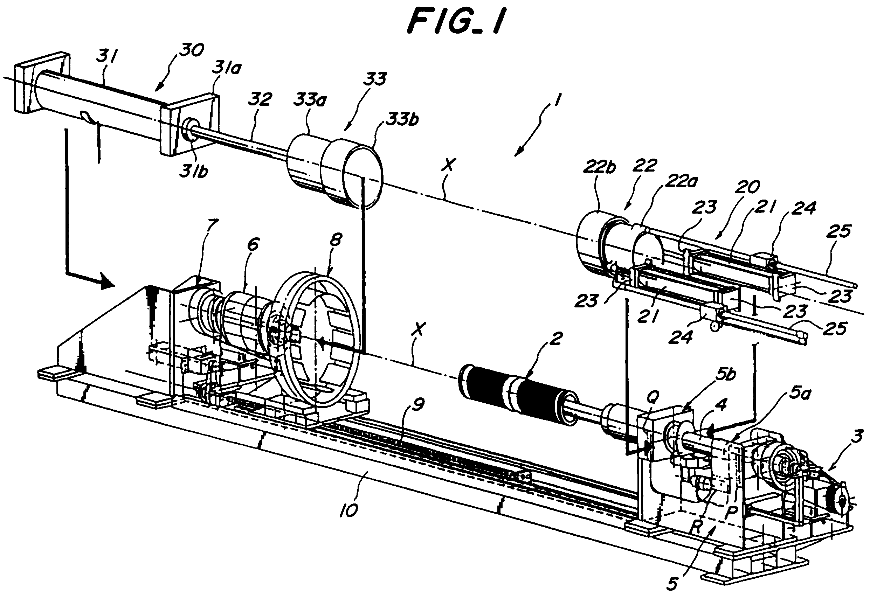

Fig. 1 is a perspective view showing the general arrangement of a single-stage type radial tire building machine according to the present invention;

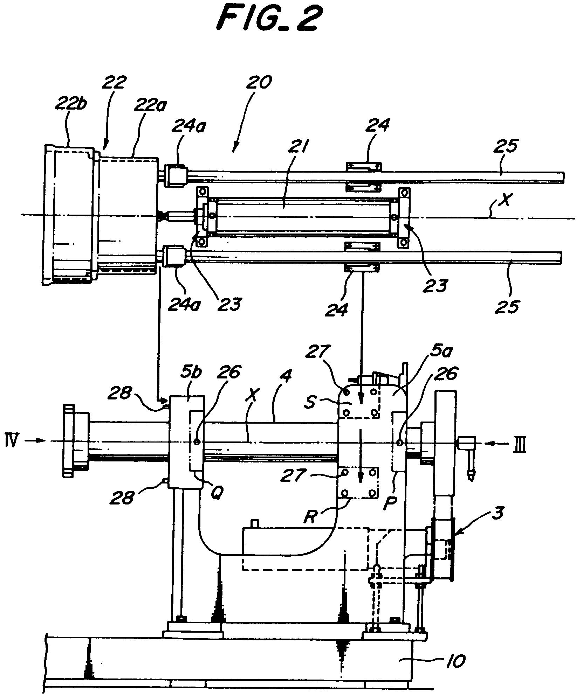

Fig. 2 is a side view of the driving device for the main drum in the building machine shown in Fig. 1;

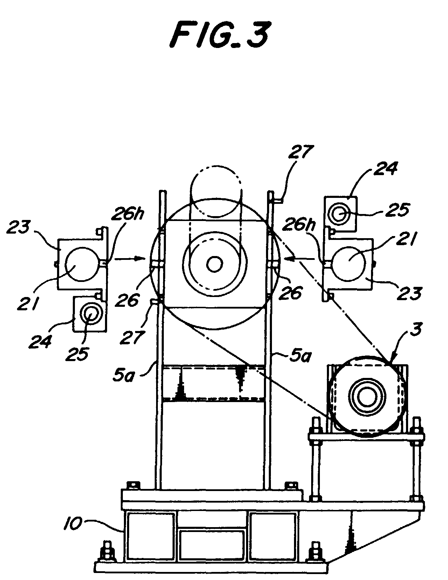

Fig. 3 is a rear view of the driving device for the main drum shown in Fig. 2, as seen in the direction of arrow III;
Fig. 4 is a front view of the driving device for the main drum shown in Fig. 2, as seen in the direction of arrow IV;

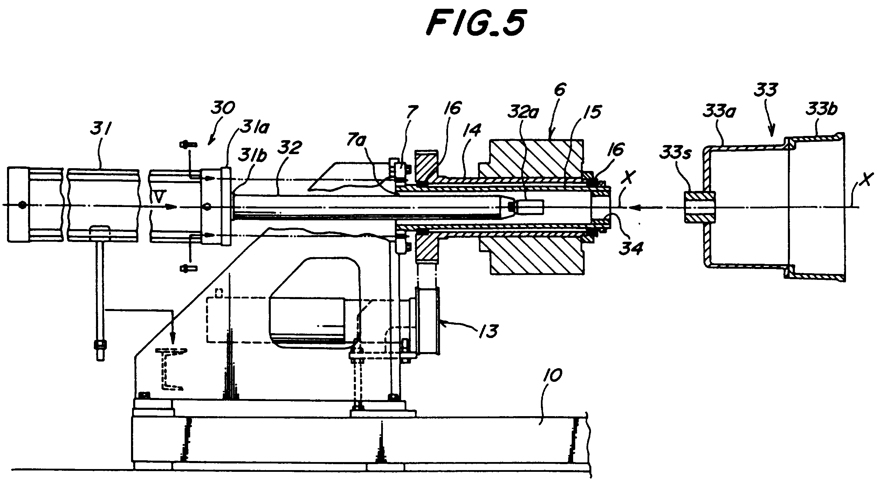

Fig. 5 is a side view of the driving device for a sub-drum of the tire building machine shown in Fig. 1;
Fig. 6 is an explanatory view showing a part of process steps for forming a green case by the single-stage type tire building machine;
Fig. 7 is an explanatory view showing the remain part of the process steps for forming the green case following the process steps of Fig. 6; and

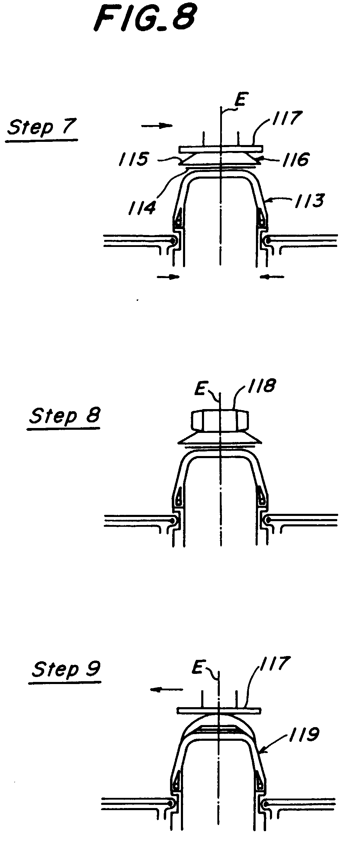

Fig. 8 is an explanatory view showing the process steps for forming a green tire from the green case shown in Fig. 7.

### BEST MODE FOR CARRYING OUT THE INVENTION

One embodiment of the present invention will now be described in further detail, with reference to Figs. 1 to 5.

Fig. 1 is a perspective view showing a general arrangement of the single-stage type radial tire building machine 1 according to the present invention. The building machine 1 comprises a double bladder type main drum 2, and a driving device 3 for driving the main drum 2 into rotation. The double bladders, which are arranged on both sides of the main drum 2, each has an ordinary basic construction which is essentially the same as the above-mentioned construction shown in Fig. 7; therefore, for a facilitated understanding of the invention, a detailed illustration thereof has been omitted. A driving shaft 4 of the main drum 2 is rotatably supported on a support 5 which comprises a support portion 5a on the side of the driving device 3, and a support portion 5b on the side of the main drum 2.

On the side of the main drum 2 which is remote from the driving device 3, there is disposed a sub-drum 6 for winding at least one member of the belt member comprising a plurality of cord layers, and a tread rubber member, into an annular ring having a circumference length which is equivalent to that of the product tire. The sub-drum 6 is rotatably supported on a support 7. Further, there is disposed a seizing and moving device 8 adjacent to the sub-drum 6, which serves to seize the belt member and the tread rubber member which have been wound on the sub-drum 6, either separately or as a mutually united top member, in a diametrically contracted state of the sub-drum, and to subsequently place them onto a green case which is in its inflated condition. A straight line X extending from the sub-drum 6 to the driving shaft 4 through the main drum 2 is the center axis thereof.

The seizing and moving device 8 is capable of moving from a waiting position (illustrated in the drawings) for seizing the top member on the sub-drum 6, to a predetermined position which is close to the main drum 2, by the feed screw 9 which is driven in the normal direction, and of returning to the waiting position by the feed screw 9 which is driven in the reverse direction.

Pressing can devices 20, 30 are shown at the upper left and upper right sides of Fig. 1, as assuming a condition in which they are removed from the molding machine 1. The inner pressing can device 20 to be detachably attached to the driving device 3 of the main drum 2 comprises a pair of double-acting cylinders as actuators disposed on both sides of the center axis X, a cylindrical portion 22 attached to the leading ends of the respective piston rods of the double-acting cylinders 21, securing pieces 23 for fixedly securing the double-acting cylinder 21, and a pair of guide rods 25 which are connected to the cylindrical portion 22 and supported on at least one pair (two pairs in the illustrated embodiment) of sliding bearings 24 so as to be movable along the center axis X. Moreover, the cylindrical portion 22 illustrated in the drawing is divided into a rear end portion 22a attached to the leading end of the piston rod, and a leading end portion 22b connected to the rear end portion 22a. On the other hand, the outer pressing can device 30 to be detachably attached to that side of the main drum 2 which is close to the sub-drum 6 comprises a double-acting cylinder 31 as an actuator, and a cylindrical portion 33 attached to the leading end of the piston rod 32 thereof. The cylindrical portion 33 is divided into a rear end portion 33a attached to the leading end of the piston rod 32, and a leading end portion 33b connected to the rear end portion 33a.

The inner and outer pressing can devices 20, 30 are attached to the main body of the molding machine 1 such that their center axes coincide with the center axis X extending from the sub-drum 6 to the driving shaft 4 through the main drum 2, as shown by the bold lines in Fig. 1. The details thereof will be described hereinafter with reference to Figs 2 to 5. It should be noted that, in Fig. 1, only the attaching positions P, Q, R of the inner pressing can device 20 for the support portions 5a, 5b are represented by the broken lines.

Fig. 2 is an explanatory view of one side of the inner pressing can device 20 before it is assembled, and the sides of the support 5 (5a, 5b) and the driving device 3 for the main drum 2, illustrating the manner of attaching these elements, Fig. 3 is an explanatory as seen from the direction of arrow III in Fig. 2, illustrating the manner of attaching the inner pressing can device 20 to the support 5, and Fig. 4 is an explanatory view as seen in the direction of arrow IV in Fig. 2, illustrating the manner of attaching the inner pressing can device 20 to the support 5,

As shown in Figs. 2 to 4, a pair of the double-acting cylinders 21 are fixedly connected to securing pieces 23 which are provided with four holes 26h to be fitted with respective guide pins 26 which are fixedly secured to the supports 5a, 5b. The double-acting cylinders 21 are detachably secured to the supports 5a, 5b by fixing the securing pieces 23 to the supports at the positions P, Q, by means of attaching screws, etc., in their centered state in which the guide pins 26 are engaged with the holes 26h. Incidentally, there may be provided tap holes corresponding to the attaching screws.

On the other hand, a pair of guide rods 25 are slidably born on two pairs of blocks, that is, slide bearings 24a, 24b in the illustrated example, as mentioned above. In this case, the bearing 24 is formed with at least one hole to be closely fitted with at least one guide pin 28 disposed on the support 5a. Similarly, the bearing 24a is formed with at least one hole to be closely fitted with at least one guide pin 28 disposed on the support 5b. With the guide pins 27, 28 fitted into the respective holes, the bearings 24, 24a are detachably fixed to the supports 5a, 5b through remaining holes by means of attaching screws, etc., at the positions R, S and at non-illustrated positions (i.e., the surface positions to which the arrow on the left-hand in Fig. 2 is directed). It is convenient to form tap holes at positions for receiving the attaching screws. In Fig. 2, the attaching position S for the securing piece 23 positioned on the rear side of the support portion 5a (i.e., the right-hand securing piece in Fig. 3) is represented by broken line.

The double-acting cylinder 21 and the slide bearings 24, 24a engaged with the pair of guide rods 25 are individually fixed to the supports 5a, 5b, and the rear end portion 22a of the cylindrical portion 22 is then connected to the piston rods of the double-acting cylinders 21 and the guide rods 25. As a result, the center axis of the cylindrical portion 22 can be defined by the centered double-acting cylinders 21 and the slide bearings 24, 24a, and the pressing can device 20 can be mounted onto the supports 5a, 5b in a facilitated manner and in a short time in corporation with the provision of the guide pins 26, 27, 28. As described above, the inner pressing can device 20 is prepared separately into respective constitutional sections, instead of being an integral part.

Fig. 5 is an explanatory view showing one side of the support 7 for supporting the sub-drum 6 and the corresponding side of the outer pressing can device 30 just before it is mounted onto the support 7. A double-acting cylinder 31 of the outer pressing can device 30 is advanced in the direction shown by arrow V in Fig. 5, and the double-acting cylinder 31 is then mounted onto the support 7 between the front side attaching portion 31a and the support 7 through a fitting coupling, in such a manner that the rotational axis of the sub-drum 6 coincide with the center axis of the double-acting cylinder 31. The fitting coupling is formed by a centering protrusion 31b on the leading end of the attaching portion 31a and the recess 7a in the support 7 for receiving the protrusion.

The sub-drum 6 is fixed to a hollow cylindrical shaft 14 which is arranged coaxially with a fixed hollow cylindrical shaft 15 fixed to the support 7. Further, a pair of roller bearings 16 are disposed between the hollow cylindrical shaft 14 and the fixed hollow cylindrical shaft 15, and a driving device 13 is connected to the cylindrical shaft 14, thereby allowing the sub-drum 6 to be driven into rotation. The piston rod 32 of the double-acting cylinder 31 extends axially thorough the fixed hollow cylindrical shaft 15. In this case, at the leading end of the fixed cylindrical shaft 15, there is preferably disposed a metal bush for bearing the piston rod 32 of the double-acting cylinder 31, so as to ensure an accurate centering and suppress or minimize the deflection of the piston rod 32.

The double-acting cylinder 31 is attached to the support 7 through the fitting coupling, and a sleeve 33s is then inserted into the leading end portion 32a of the piston rod 32, thereby mounting the cylindrical portion 33 thereon. On this occasion, a locking pin (not shown) for preventing loosening of the cylindrical portion 33 is driven into the sleeve 33s. It is desirable that the cylindrical portion 33 is constituted by a rear end portion 33a and a leading end portion 33b which is detachably secured to the rear end portion 33a, as is the case with the above-mentioned cylindrical portion 22, such that the leading end portion 33b can be suitably replaced according to the change of the tire design specification.

As described above, the inner and outer can devices 20, 30 are divided into the cylindrical portions 22, 23 and the other portions, and previously prepared separately from the main body of the single-stage type molding machine 1. Then, for example, the turning-up operation is usually executed by the double bladder type building machine and, whenever necessary, the pressing can devices 20, 30 are attached in a facilitated manner and in a short mounting time so as to perform a can type turning-up operation in association with the outer bladder, and vice versa. Also, when the leading end portions 22b, 33b of the cylindrical portions 22, 33 are made replaceable, it is possible to apply the machine to the building of various kinds of the tires.

The building process for forming green cases and green tires by using the single-stage type radial tire building machine according to the invention basically includes one of the above-mentioned steps 1 to 3 in Fig. 6, one of sequential steps selected from the above-mentioned steps 4A to 6A and steps 4B to 6B in Fig. 7, and the steps 7 to 9 in Fig. 8. This building process is different form the above-mentioned conventional technique in that there is provided inner and outer side bladders of the double bladder type, even when the turning-up operation shown in Fig. 7 is executed, and that the inner side bladder is not inflated when the pressing can devices 20, 30 perform the turning-up operation. This enables one of the building steps 4A to 6A and the building steps 4B to 5B in Fig. 7 to be suitably selected, which advantageously reduces the investment to the single-stage type building machine and realizes a compact arrangement of the building machine as an additional advantage.

Incidentally, in connection with an actual example of the single-stage type tire building machine for automobile radial tires, it has been confirmed that the total investment including the production cost of the inner and the outer pressing can devices 20, 30 and the modification cost of the single-stage type building machine of conventional double bladder type machine was only about 1/3 of the modification cost of the conventional one, and similarly the term required for the modification was only about 1/3 of the conventional one.

According to the invention, it is possible to realize a single-stage type molding machine comprising the double bladder type main drum, which is provided detachably with the inner and the outer pressing can devices, and which is thus capable of promptly coping with fluctuation of the production ratio of the general purpose radial tires and the high performance radial tires at a minimized investment.

## Claims

1. A single-stage type building machine for radial tires, comprising:
a main drum for winding a radial carcass ply member;
a driving device for driving said main drum into rotation;
locking means for fixedly engaging bead reinforcing members to predetermined portions on both sides of said carcass ply member;
turning-up means for turning-up predetermined portions of the carcass ply member around said bead reinforcing members, respectively; and
a sub-drum spaced from said driving device for the main drum, for winding at least one of a belt member and a tread rubber member;
said turning-up means comprising inner and outer double side bladders on both sides of said main drum, which can be inflated by injection of a pressurized fluid, and pressing can devices detachably arranged on both sides of said main drum, each of said pressing can devices having an actuator and a hard cylindrical portion, which is attached to one end of said actuator and smaller in inner diameter than the maximum inflation diameter of said outer side bladder so that said outer side bladder is received in said cylindrical portion in its inflated condition when said cylindrical portion is displaced by operating said actuator; and
whereby said carcass ply member can be selectively turned-up either by inflation of said inner and said outer side bladders, or by combination of inflation of said outer side bladder with displacement of said cylindrical portion of the pressing can device.

2. The building machine according to claim 1, wherein said cylindrical portion of at least one of said pressing can devices has a leading end portion and a rear end portion connected to said one end of the actuator, said leading end portion being detachably attached to said rear end portion.

3. The building machine according to claim 1, wherein said sub-drum has a hollow shaft, said actuator of the pressing can device on a side of said sub-drum having a rod connected to said cylindrical portion through said hollow shaft of said sub-drum, and being detachably attached to a support for rotatably supporting said sub-drum.

4. The building machine according to claim 3, wherein said pressing can device on the side of said sub-drum is detachably attached to said support through a fitting coupling which maintains a coaxial relationship between said pressing can device and said sub-drum.

5. The building machine according to claim 3, wherein said sub-drum having said hollow shaft is rotatably supported on a fixed hollow cylinder of said support such that said rod extends through said hollow cylinder.

6. The building machine according to claim 1, wherein said pressing can device on the side of said driving device for said main drum is detachably attached to a support for rotatably supporting said main drum on the side of said driving device therefor.

7. The building machine according to claim 6, wherein said pressing can device on the side of said driving device for said main drum is detachably attached to said support through a centering guide member which maintains a coaxial relationship between said can device and said main drum.

8. The building machine according to claim 1, wherein said pressing can device on the side of said driving device for said main drum has a double-acting cylinder, a guide rod, a block for slidably bearing said guide rod, and a cylindrical portion which can be connected to said double-acting cylinder and said guide block, respectively, and operated such that said double-acting cylinder and said guide rod are secured coaxially to said support of said main drum, and said cylindrical portion is then connected to said double-acting cylinder and said guide rod.
